Europäisches Patentamt

(19) European Patent Office

Office européen des brevets

(11) Numéro de publication: **0 067 742**

**A1**

(12) # DEMANDE DE BREVET EUROPEEN

(21) Numéro de dépôt: **82400948.4**

(22) Date de dépôt: **24.05.82**

(51) Int. Cl.³: **G 02 F 1/01**
**G 02 F 1/133**

(30) Priorité: **27.05.81 FR 8110563**

(43) Date de publication de la demande:
**22.12.82 Bulletin 82/51**

(84) Etats contractants désignés:
**CH DE GB IT LI NL**

(71) Demandeur: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Clerc, Jean Frédéric**
**10, Allée du Pré Blanc**
**F-38240 Meylan(FR)**

(72) Inventeur: **Vinet, Françoise**
**52, rue Thiers**
**F-38000 Grenoble(FR)**

(74) Mandataire: **Mongrédien, André et al,**
**c/o Brevatome 25, rue de Ponthieu**
**F-75008 Paris(FR)**

(54) Procédé de fabrication d'une cellule à milieu liquide et cellule obtenue par ce procédé.

(57) Le procédé consistant à disposer en regard l'une de l'autre les deux parois (4, 6), à disposer entre les deux parois des cales d'épaisseur constante (8) et réparties de façon régulière entres lesdites parois et à rendre solidaires les deux parois le long de leurs bords, se caractérise en ce que l'on fait un vide partiel à l'intérieur de la cellule et en ce qu'on remplit de milieu liquide la cellule de façon qu'il subsiste une poche gazeuse (12) créant une dépression interne ($P_i$) égale à la pression de vapeur saturante du liquide, cette dépression interne transmise aux parois (4, 6) par le milieu liquide (2) permettant d'appliquer, parallèlement entre elles, les deux parois sur les cales d'épaisseur (8).

FIG. 1

La présente invention a pour objet un procédé de fabrication d'une cellule à milieu liquide et une cellule obtenue selon ce procédé. Elle trouve une application en optoélectronique, et en particulier dans la réalisation d'écrans de visualisation d'images et/ou de données alpha-numériques.

De façon plus précise, l'invention a pour objet un procédé de fabrication d'une cellule comprenant un milieu liquide intercalé entre deux parois planes, généralement minces par rapport à leurs dimensions transversales et généralement réalisées en verre, maintenues écartées l'une de l'autre. Ces deux parois sont rendues solidaires l'une de l'autre au voisinage de leurs bords par des résines ou d'autres liants convenables permettant de les bloquer dans la position correcte. Le maintien des deux parois à une certaine distance l'une de l'autre est obtenu au moyen de cales d'épaisseur constante disposées le long des bords soudés ou réparties le plus uniformément possible entre les deux parois.

Dans le domaine de la visualisation, le milieu liquide principalement utilisé est un cristal liquide qui comme son nom l'indique présente à l'état liquide des propriétés caractéristiques des cristaux solides et en particulier en ce qui concerne l'anisotropie.

On sait que pour obtenir un bon fonctionnement d'une cellule en général et en particulier d'une cellule à cristal liquide, il faut que l'épaisseur de toute la zone utile de ladite cellule, c'est-à-dire la zone où se trouve le cristal liquide, soit la plus constante possible. En effet, des variations dans l'épaisseur de la zone utile peuvent produire des modifications indésirables dans le fonctionnement de la cellule ainsi que des phénomènes de destruction, en particulier, dans l'alignement des molécules du cristal liquide, ceci pouvant être très gênant dans les domaines de visualisation. En conséquence, les parois planes de la cellule doivent être rigoureusement parallèles.

Cependant, suivant le milieu liquide utilisé, donc suivant les effets optoélectroniques employés, on peut tolérer des variations légères de l'épaisseur du milieu liquide. En effet, pour un cristal liquide du type nématique dont les molécules sont disposées en hélice (nématique "twisté"), l'épaisseur du cristal liquide peut varier de ± 2 μ pour un cristal liquide à commande multiplexée et de ± 1 μ pour un cristal à commande non multiplexée, pour un cristal liquide du type cholestérique bistable ± 1 μ et pour un cristal liquide à biréfringence commandée électriquement de ± 0,5 μ.

Un premier procédé de fabrication de cellules, employé industriellement, consistant en un tri de lames de verre d'environ 1 millimètre d'épaisseur, et en une répartition statistique de billes de verre ou de fibres optiques calibrées disposées entre les lames de verre parallèles constituant les parois de la cellule, permet d'obtenir au mieux une épaisseur de milieu liquide définie par le diamètre des billes ou des fibres, variant de ± 1 μ.

Ce premier procédé présente l'inconvénient de ne pouvoir être utilisé que pour des cellules de petites surfaces, et, en particulier, ne permet pas la fabrication de grands écrans de visualisation.

Un deuxième procédé de fabrication de cellules, employé industriellement, consistant à utiliser des lames de verre épaisses, c'est-à-dire présentant une épaisseur égale au dixième de la plus grande dimension de la cellule, optiquement polies, permet d'obtenir une épaisseur de cristal liquide variant de ± 0,5 μ.

Ce procédé, bien qu'il garantisse une planéité suffisante, nécessite l'utilisation de lames de verre épaisses. En effet, la fabrication d'une cellule présentant une surface de 20 centimètres (cm) sur 20 cm conduit à utiliser une cellule de 4 cm d'épaisseur. L'utilisation de lames de verre épaisses peut être néfaste pour la visualisation d'images ou de données alpha-numériques.

La présente invention a pour objet un procédé de fabrication de cellules à milieu liquide permettant de remédier aux inconvénients cités ci-dessus, et permettant notamment d'obtenir des cellules présentant une épaisseur constante à 0,5 µ près et présentant de grandes dimensions.

De plus, la présente invention peut être utilisée avec des lames ou parois de verre minces, ce qui permet d'améliorer l'aspect visuel de la cellule puisque la formation d'une image sur les parois de la cellule se fait à proximité du centre actif de la cellule, c'est-à-dire du milieu liquide, et donc la formation des images se fait sans perte de résolution.

De façon plus précise, l'invention a pour objet un procédé de fabrication d'une cellule à milieu liquide comprenant deux parois consistant :
- à disposer en regard l'une de l'autre lesdites deux parois,
- à disposer entre les deux parois des cales d'épaisseur constante et réparties de façon régulière entre lesdites parois ; et
- à rendre solidaires les deux parois le long de leurs bords. Ce procédé se caractérise en ce que l'on fait un vide partiel à l'intérieur de la cellule et en ce qu'on remplit de milieu liquide la cellule de façon qu'il subsiste une poche gazeuse créant une pression interne égale à la pression de vapeur saturante

B 7151.3 LC

du liquide, inférieure à la pression extérieure à la cellule, la dépression interne ainsi créée, transmise aux parois par le milieu liquide, permettant d'appliquer les deux parois sur les cales d'épaisseur.

Selon un mode de mise en oeuvre préféré de l'invention, on crée une attraction supplémentaire entre les parois au moyen de forces de capillarité entre le milieu liquide et les parois, cette attraction étant telle que ces effets s'additionnent à ceux produits par la pression interne de la cellule.

Le fait de créer une attraction supplémentaire à l'intérieur de la cellule dont les effets s'additionnent à ceux de la pression interne régnant dans la cellule, facilite le placage des deux parois isolantes sur les cales d'épaisseur et permet donc d'obtenir des cellules d'épaisseur constante à 0,5 µ près.

Selon une autre caractéristique essentielle de l'invention ce procédé de fabrication consistant à disposer en regard l'une de l'autre les deux parois, à disposer entre les deux parois des cales d'épaisseur constante et réparties de façon régulière entre les parois, et à rendre solidaires les deux parois le long de leurs bords, se caractérise en ce que l'on crée une attraction entre les parois au moyen de forces de capillarité entre le milieu liquide et les parois, cette attraction permettant d'appliquer les deux parois sur les cales d'épaisseur.

Le milieu liquide intercalé entre les deux parois parallèles est de préférence un cristal liquide.

Selon une variante de mise en oeuvre du procédé, avant de rendre solidaires les deux parois, on recouvre les surfaces des parois se trouvant en vis-à-vis de deux matériaux présentant des tensions superficielles très différentes afin de faciliter la création de la poche gazeuse au droit du matériau présentant la tension superficielle la plus faible et en dehors du matériau présentant la tension superficielle la plus grande.

Selon une autre variante de mise en oeuvre du procédé, on utilise des parois définissant entre elles deux régions d'épaisseur différentes afin de faciliter la création de la poche gazeuse au droit de la région d'épaisseur la plus grande, correspondant à la force de tension superficielle la plus faible et en dehors de la région d'épaisseur la plus faible, correspondant à la force de tension superficielle la plus grande.

D'autres caractéristiques et avantages de l'invention ressortiront mieux de la description qui va suivre, donnée à titre explicatif mais nullement limitatif en référence aux figures annexées, dans lesquelles :

- la figure 1 représente une vue en coupe d'une cellule à milieu liquide, selon une première variante ;
- la figure 2 représente une vue de dessus de la cellule de la figure 1 ;
- la figure 3 représente une vue en coupe d'une cellule à milieu liquide, selon une deuxième variante ; et
- la figure 4 est une schéma permettant de mettre en évidence les effets des forces de capillarité.

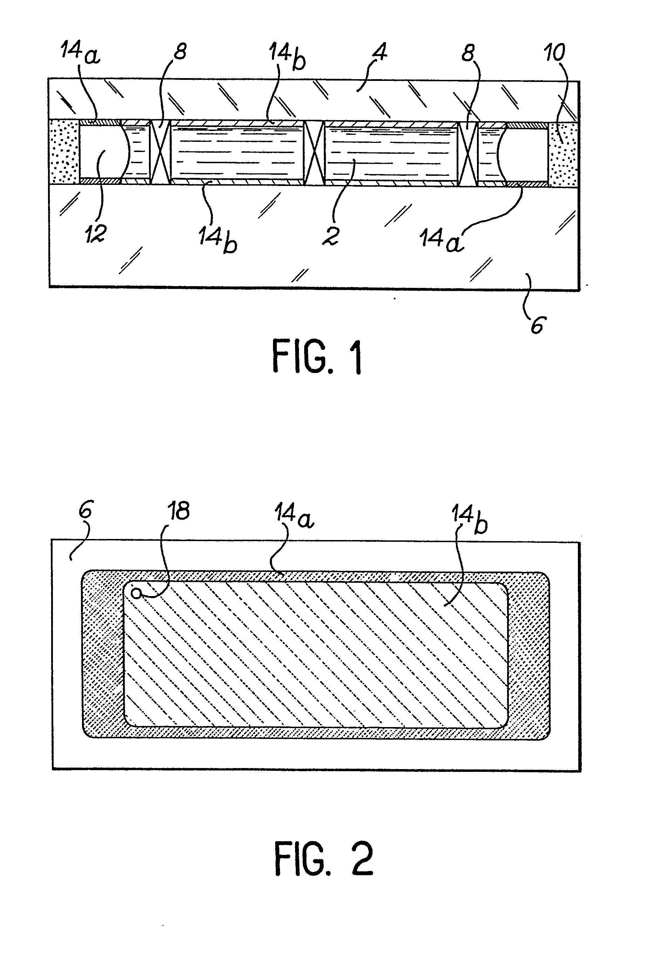

Sur la figure 1, on a représenté en coupe, une cellule à milieu liquide. La cellule est constituée d'un milieu liquide 2, pouvant être un cristal liquide, intercalé entre deux parois planes 4 et 6 parallèles entre elles. Les deux parois planes 4 et 6, réalisées en verre, sont maintenues écartées l'une de l'autre au moyen de cales d'épaisseur constante 8, régulièrement réparties entre les deux parois. Les parois 4 et 6 sont solidaires l'une de l'autre au moyen d'une soudure 10 effectuée au voisinage des bords desdites parois. La soudure 10 qui sert de mur d'étanchéité peut être réalisée à l'aide de résine ou par sérigraphie de verre fusible.

B 7151.3 LC

La fabrication d'une telle cellule à milieu liquide se fait en déposant par exemple sur l'une des parois des cales d'épaisseur constante 8 et ce par tout moyen connu. La paroi munie des cales d'épaisseur 8 est ensuite disposée en regard de l'autre paroi de façon que les cales soient placées entre les deux parois. Enfin, on rend solidaires les deux parois 4 et 6 à l'aide de la soudure 10.

Selon l'invention, après soudure des deux parois 4 et 6, on fait un vide partiel à l'intérieur de la cellule et on remplit la cellule de milieu liquide, de façon qu'il subsiste une poche gazeuse telle que 12. L'orifice de remplissage 18 est utilisé à ces deux fins. Cette poche 12 permet de créer à l'intérieur de la cellule une dépression interne $P_i$ égale à la pression de vapeur saturante du milieu liquide 2, c'est-à-dire que la pression régnant dans la cellule est inférieure à celle régnant hors de la cellule. Cette dépression interne $P_i$ est transmise aux parois 4 et 6 par le milieu liquide 2. Cette dépression interne $P_i$ permet de plaquer sur les cales d'épaisseur 8 la paroi non munie desdites cales. Ceci permet d'obtenir une cellule dont les parois sont parallèles entre elles.

Afin de faciliter le placage des parois sur les cales d'épaisseur, on crée une force d'attraction supplémentaire à partir de forces de capillarité ou de tension superficielle entre le milieu liquide et les parois de la cellule, telle que ses effets s'additionnent à ceux produits par la dépression interne $P_i$ régnant dans la cellule.

Selon une première variante, la force d'attraction supplémentaire est obtenue en recouvrant les surfaces des parois 4 et 6 en vis-à-vis de deux matériaux tels que 14a et 14b présentant des tensions superficielles très différentes. De plus, l'utilisation

B 7151.3 LC

7  0067742

de ces matériaux de tensions superficielles très différentes facilite la création de la poche gazeuse 12, et
donc de la dépression interne $P_i$.

Sur la figure 2, on a représenté, au moyen
d'une vue de dessus de la cellule, l'emplacement respectif des deux matériaux 14a et 14b. Le matériau 14a
présntant la tension superficielle la plus faible, correspondant à un matériau non mouillant, peut être déposé à la périphérie de la cellule sur les surfaces des
parois en vis-à-vis et le matériau 14b présentant la
tension superficielle la plus grande, correspondant à
un matériau mouillant, au centre desdites surfaces.
Etant donné la différence de tension superficielle entre le matériau non mouillant 14a et le matériau mouillant 14b, le milieu liquide 2, après avoir rempli la
cellule, sera attiré par le matériau 14b dont la tension superficielle est la plus grande. En conséquence,
la poche gazeuse 12 se trouvera chassée en regard du
matériau 14a et donc en dehors du matériau 14b.

On constate donc que l'utilisation de deux
matériaux de tensions superficielles différentes permet, en plus du placage des deux parois 4 et 6 sur les
cales d'épaisseur 8 et de la création de la poche gazeuse 12, de localiser le milieu liquide là où on le
désire dans la cellule. Ceci peut être très utile dans
le cas d'une cellule d'affichage prévue pour la visualisation d'images et/ou de données alpha-numériques. En
effet, la poche gazeuse 12 pourra être localisée hors
de la zone utile à l'affichage.

Le matériau 14a présentant la tension superficielle la plus faible est par exemple un matériau
fluoré tel que du fluorure de carbone, et du fluorure
de magnésium.

Le matériau 14b présentant la tension superficielle la plus grande est par exemple un matériau
choisi dans le groupe comprenant la lécithine, les siloxanes de formule $(SiO)_n$, les résines du type sulfona-

B 7151.3 LC

te d'alkylbenzène connues sous l'abréviation de résine ABS, les résines connues sous l'abréviation DMOAP, etc....

Selon une deuxième variante, la force d'attraction supplémentaire est obtenue en utilisant des parois 4 et 6 définissant entre elles des régions d'épaisseurs différentes. L'utilisation de deux épaisseurs différentes pour la cellule à milieu liquide facilite, de plus, la création de la poche gazeuse 12.

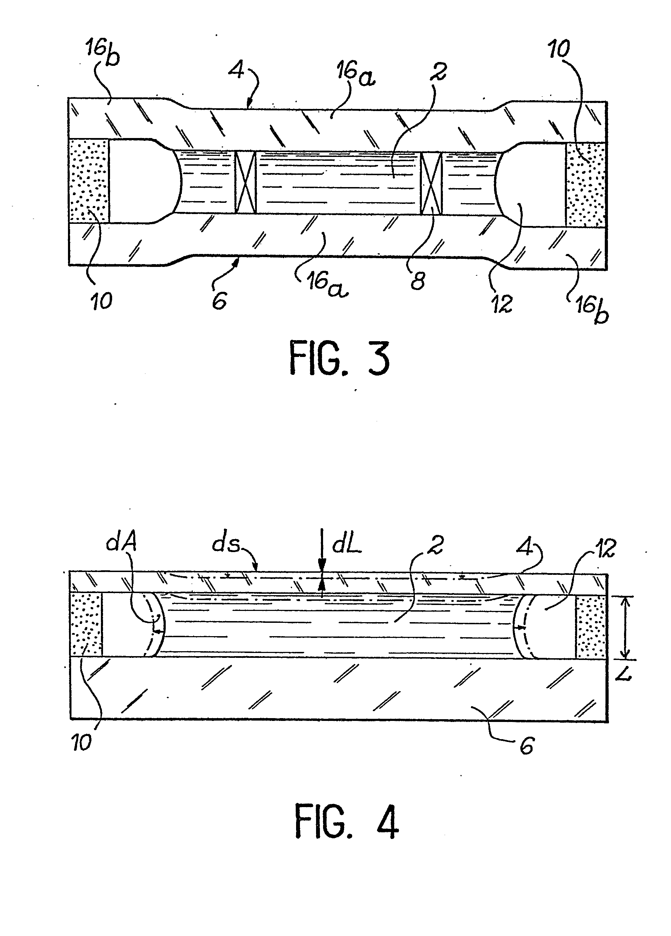

Sur la figure 3, on a représenté au moyen d'une vue en coupe de la cellule, un emplacement possible pour les deux régions. La région référencée 16a, correspondant à l'épaisseur de la cellule la plus faible et donc à la tension superficielle la plus grande (loi de Jurin), attire vers elle le milieu liquide 2. En conséquence, la zone occupée par le milieu liquide se trouvera en regard de la région 16a d'épaisseur la plus faible et, donc, la poche 12 se trouvera en dehors de ladite région 16a, c'est-à-dire au droit de la région 16b d'épaisseur la plus grande. Comme schématisé sur cette figure, la région 16a peut être située sur la partie centrale de la cellule et la région 16b sur la périphérie de la cellule.

De façon à faciliter la compréhension, les régions 16a et 16b ont été volontairement exagérées sur la figure 3.

Bien entendu, on peut utiliser une cellule dont une seule paroi définirait lesdites régions 16a, 16b, l'autre paroi étant rigoureusement plane.

Comme précédemment, l'utilisation d'une cellule présentant deux régions d'épaisseurs différentes permet, en plus, du placage des parois 4 et 6 sur les cales d'épaisseur 8 et de la création de la poche 12 de localiser le milieu liquide dans la cellule.

Le procédé de fabrication d'une cellule à milieu liquide, tel que décrit précédemment, permet d'obtenir des cellules dont l'épaisseur reste constante à 0,5 µ près.

Comme on l'a vu ci-dessus, le placage des parois de la cellule sur les cales d'épaisseur se fait en combinant la différence de pression entre l'intérieur et l'extérieur de la cellule avec les effets des forces de capillarité ou de tension superficielle entre le milieu liquide et les parois de ladite cellule, ces forces de capillarité résultant de l'utilisation de deux matériaux présentant des tensions superficielles différentes et/ou des parois définissant deux régions d'épaisseurs différentes.

On va maintenant mettre en évidence, au moyen de la figure 4, l'effet des forces de capillarité et montrer que cet effet est une pression homogène exercée sur les parois de la cellule.

Considérons que l'une des parois, par exemple la paroi supérieure 4 fléchisse sur une surface dS en s'enfonçant d'une épaisseur dL ; la situation avant fléchissement est représentée en trait plein sur la figure 4 et la situation après fléchissement en pointillés. Le fléchissement de la paroi correspond à une diminution dv de la capacité volumique de la cellule telle que $dv = dS \times dL$.

Le milieu liquide qui est incompressible couvre alors une zone supplémentaire de la cellule de surface dA vérifiant la relation (1) :

(1)   $dA \times L = dS \times dL$

où L représente l'épaisseur interne de la cellule.

Le bilan énergétique fait apparaître entre les deux situations, c'est-à-dire entre la situation avant fléchissement et après fléchissement de la paroi, un écart d'énergie dE tel que $dE = K \times dA$, pour un fléchissement d'amplitude dL, relation dans laquelle K re-

B 7151.3 LC

présente une constante de capillarité caractéristique de l'interface milieu liquide-paroi. Le signe de la constante K et sa valeur dépendent par exemple du matériau recouvrant la paroi, dans le cas où celle-ci est recouverte des deux matériaux présentant des tensions superficielles différentes.

En conséquence, il s'applique sur l'élément de surface dS de la paroi, une force de capillarité $F_c$ correspondant au gain d'énergie dE vérifiant la relation (2) :

$$(2) \quad F_c = \frac{d}{dL} \quad (K \times dA)$$

En remplaçant dans la relation (2) la valeur de dA obtenue dans la relation (1) on trouve que

$$F_c = \frac{d}{dL} \left( \frac{K \times dS \times dL}{L} \right) \quad \text{soit} \quad F_c = K \times \frac{dS}{L}$$

En conséquence, la pression $P_c$ exercée par les forces de capillarité $F_c$ sur l'élément de surface dS qui est égal à $F_c/dS$ soit $K/L$ est une pression homogène.

Dans le cadre de l'invention, les parois 4 et 6 de la cellule, soumises à la pression interne $P_i$ combinée à la force de pression supplémentaire $P_c$ subissent un léger fléchissement entre les cales d'épaisseur 8.

En conséquence, les paramètres tels que la pression interne $P_i$, la constante de capillarité K, le module de YOUNG et l'épaisseur du verre constituant les parois, sont choisis de façon que le fléchissement de chaque paroi entre deux cales d'épaisseur n'excède pas 0,25 μ soit 0,5 μ pour les deux parois.

Les parois utilisées peuvent être toutes deux réalisées en un verre souple et mince (figure 3),

B 7151.3 LC

c'est-à-dire présenter une épaisseur voisine de 4 mm. Mais l'une des deux parois peut être réalisée en un verre souple et mince et l'autre en un verre épais (figures 1 et 4). Dans le cas d'une cellule à parois en verre minces, le fléchissement de la cellule ne s'effectuera que sur cette paroi et les tolérances sur l'épaisseur de la cellule pourront être satisfaites plus aisément.

Le fait d'utiliser des cellules dont l'une au moins des deux parois la constituant est réalisée en verre de faible épaisseur permet, dans le cas de cellule d'affichage, d'améliorer considérablement l'aspect visuel. La visualisation dans le cas d'une cellule présentant une seule paroi en verre mince aura lieu à travers ladite paroi.

Il convient par ailleurs de noter qu'il est possible de ne produire la force d'application des plaques sur les cales d'épaisseur que par les forces de capillarité, c'est-à-dire sans faire un vide partiel dans la cellule.

B 7151.3 LC

REVENDICATIONS

1. Procédé de fabrication d'une cellule à milieu liquide comprenant deux parois (4, 6) consistant :
- à disposer en regard l'une de l'autre les deux parois (4, 6) ;
- à disposer entre les deux parois des cales d'épaisseur constante (8) et réparties de façon régulière entre lesdites parois ; et
- à rendre solidaires les deux parois le long de leurs bords, caractérisé en ce que l'on fait un vide partiel à l'intérieur de la cellule et en ce qu'on remplit de milieu liquide la cellule de façon qu'il subsiste une poche gazeuse (12) créant une pression interne $(P_i)$ égale à la pression de vapeur saturante du liquide, inférieure à la pression extérieure à la cellule, la dépression interne ainsi produite, transmise aux parois (4, 6) par le milieu liquide (2) permettant d'appliquer les deux parois sur les cales d'épaisseur (8).

2. Procédé de fabrication selon la revendication 1, caractérisé en ce que l'on crée une attraction supplémentaire entre les parois au moyen de forces de capillarité entre le milieu liquide et les parois, cette attraction étant telle que ses effets s'additionnent à ceux produits par la dépression interne $(P_i)$ de la cellule.

3. Procédé de fabrication d'une cellule à milieu liquide comprenant deux parois (4, 6) consistant :
- à disposer en regard l'une de l'autre les deux parois (4, 6) ;
- à disposer entre les deux parois des cales d'épaisseur constante (8) et réparties de façon régulière entre les parois ; et

- à rendre solidaires les deux parois le long de leurs
  bords,

caractérisé en ce que l'on crée une attraction entre
les parois au moyen de forces de capillarité entre le
milieu liquide et les parois, cette attraction permettant d'appliquer les deux parois sur les cales d'épaisseur (8).

4. Procédé de fabrication selon l'une quelconque des revendications 1 à 3, caractérisé en ce que,
avant de rendre solidaires les deux parois (4, 6), on
recouvre les surfaces des parois en vis-à-vis de deux
matériaux (14a, 14b) présentant des tensions superficielles très différentes afin de faciliter la création
de la poche gazeuse (12) au droit du matériau présentant la tension superficielle la plus faible (14a) et
en dehors du matériau présentant la tension superficielle la plus grande (14b).

5. Procédé de fabrication selon la revendication 4, caractérisé en ce que le matériau (14a) présentant la tension superficielle la plus faible est un
matériau fluoré.

6. Procédé de fabrication selon la revendication 5, caractérisé en ce que le matériau fluoré est
choisi dans le groupe comprenant le fluorure de carbone; et le fluorure de magnésium.

7. Procédé de fabrication selon l'une quelconque des revendications 4 à 6, caractérisé en ce que
le matériau (14b) présentant la tension superficielle
la plus grande est choisie dans le groupe comprenant la
lécithine, les siloxanes, les résines du type sulfonate
d'alkylbenzène et les résines connues sous l'abréviation DMOAP.

8. Procédé de fabrication selon l'une quelconque des revendications 1 à 7, caractérisé en ce que
l'on utilise des parois définissant entre elles deux

B 7151.3 LC

régions (16a, 16b) d'épaisseurs différentes afin notamment de faciliter la création de la poche gazeuse (12) au droit de la région d'épaisseur la plus grande (16b) et en dehors de la région d'épaisseur la plus faible (16a).

9. Procédé de fabrication selon l'une quelconque des revendications 1 à 8, caractérisé en ce que le milieu liquide (2) est un cristal liquide.

10. Procédé selon l'une quelconque des revendications 1 à 9, caractérisé en ce que l'une au moins des parois constituant la cellule est réalisée en un verre présentant une faible épaisseur.

11. Application du procédé selon l'une quelconque des revendications 1 à 10, à l'obtention de cellules d'affichage à milieu liquide présentant une épaisseur constante à 0,5 µ près et de grandes dimensions.

12. Cellules à milieu liquide obtenues selon un procédé conforme à l'une quelconque des revendications 1 à 10.

FIG. 1

FIG. 2

FIG. 3

FIG. 4

# Office européen des brevets

## RAPPORT DE RECHERCHE EUROPEENNE

EP 82 40 0948

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | US-A-3 799 651 (J.L.JANNING) *Colonne 2, lignes 17-66; figures 1b-5b* | 1 | G 02 F 1/01 G 02 F 1/133 |
| P,Y | PATENTS ABSTRACTS OF JAPAN, vol. 5, no. 173, 5 novembre 1981, page P 87 845; & JP - A - 56 102 828 (SUWA SEIKOSHA K.K.) (17-08-1981) | 1 | |
| A | FR-A-2 220 839 (HITACHI) *Revendications 1,7; figures 2b-4* | 1 | |
| A | FR-A-2 191 135 (ELECTROVAC) *Revendication 1; figures 1-9* | 1 | |
| A | FR-A-2 225 068 (HONEYWELL BULL) *Page 3, ligne 4 - page 5, ligne 12; figures 1,2,5-7* | | **DOMAINES TECHNIQUES RECHERCHES (Int. Cl. 3)** G 02 F 1/01 G 02 F 1/133 G 02 F 1/17 |

Le présent rapport de recherche a été établi pour toutes les revendications

| Lieu de la recherche | Date d'achèvement de la recherche | Examinateur |
|---|---|---|
| LA HAYE | 02-09-1982 | BORMS F. |